Europäisches Patentamt

European Patent Office

Office européen des brevets

(19)

(11) Veröffentlichungsnummer: **0 159 048 B1**

(12) # EUROPÄISCHE PATENTSCHRIFT

(45) Veröffentlichungstag der Patentschrift: **05.06.91**

(21) Anmeldenummer: **85105228.2**

(22) Anmeldetag: **14.09.82**

(51) Int. Cl.⁵ **A01F 15/14**

(60) Veröffentlichungsnummer der früheren Anmeldung nach Art. 76 EPÜ: **0 075 252**

(54) **Automatische Bindeeinrichtung für Maschinen zum Herstellen von zylindrischen Ballen aus Erntegut in einer Wickelkammer.**

(30) Priorität: **17.09.81 US 303274**

(43) Veröffentlichungstag der Anmeldung:
**23.10.85 Patentblatt 85/43**

(45) Bekanntmachung des Hinweises auf die Patenterteilung:
**05.06.91 Patentblatt 91/23**

(84) Benannte Vertragsstaaten:
**BE DE FR GB IT LU NL**

(56) Entgegenhaltungen:
**US-A- 4 150 614**

(73) Patentinhaber: **DEERE & COMPANY**
**1 John Deere Road**
**Moline, Illinois 61265(US)**

(72) Erfinder: **Meiers, Gerald Franklyn**
**1014 Chester**
**Ottumwa Iowa 52501(US)**

(74) Vertreter: **Fricke, Joachim, Dr. et al**
**Dr. R. Döring, Dr. J. Fricke, Patentanwälte**
**Josephspitalstrasse 7**
**W-8000 München 2(DE)**

EP 0 159 048 B1

# Beschreibung

Die Maschine betrifft eine automatische Bindeeinrichtung mit den Merkmalen des Oberbegriffs des Anspruchs 1.

Eine solche Maschine ist aus der US-A-41 50 614 bekannt. Der Kolben des hydraulischen Schwenkantriebes wird bei dieser bekannten Presse von einer Pumpe versorgt, die ständig angetrieben wird. Das bedeutet, daß das hydraulische System, das in aller Regel auf dem die Maschine ziehenden Fahrzeug angeordnet ist, ständig belastet wird und entsprechend dimensioniert werden muß. Auch erfolgt die Betätigung des hydraulischen Zylinders bzw. des diesem zugeordneten Dreistellungsventils über ein sehr aufwendiges Steuergestänge. Auch bedarf die bekanne Vorrichtung einer in der einen Richtung bewegend auf den Garnführungsarm einwirkenden Vorspanneinrichtung und einer Verriegelungseinrichtung, um in der Ruhestellung den Garnführungsarm gegen die Wirkung der Vorspanneinrichtung bzw. gegen die Einwirkung äußerer Verstellkräfte festzulegen.

Demgegenüber ist es Aufgabe der Erfindung eine automatische Bindeeinrichtung der eingangs näher bezeichneten Art so weiterzubilden, daß der Antrieb des Garnführungsarmes wesentlich vereinfacht und sicherere gestaltet und ohne größeren Aufwand auch bei Ballen mit unterschiedlichem vorbestimmtem Durchmesser eingesetzt werden kann.

Diese Aufgabe wird durch die Merkmale des kennzeichnen den Teils des Anspruchs 1 gelöst.

Bei der neuen Ausbildung wird die Bewegung des Garnführungsarmes ausgelöst und beendet durch Ein- bzw. Ausschalten der den hydraulischen Schwenkantrieb speisenden Druckmittelpumpe. Das den Durchmesser des entstehenden Ballens abtastende Glied kann somit direkt mit dem Antrieb für die Druckmittelpumpe steuerungsmäßig verbunden sein, um so bei Erreichen des gewünschten Ballendurchmessers den Antrieb auszulösen. Dadurch ergibt sich eine sehr einfache Einstellungsmöglichkeit für den Auslösepunkt der automatischen Bindeeinrichtung in Bezug auf verschiedene vorgegebene Durchmesser, da lediglich das Steuergestänge zwischen dem den Ballendurchmesser fühlenden Glied und dem Antrieb entsprechend eingestellt zu werden braucht. Dies vereinfacht die Anordnung und Betriebsweise außerordentlich. Ein weiterer Vorteil besteht darin, daß bei dieser Anordnung der Garnführungsarm keiner Vorspanneinrichtung für die Ausführung seiner Bewegung und damit auch keiner Verriegelungseinrichtung für die Ruhestellung bedarf.

Die Merkmale der Unteransprüche beinhalten zweckmäßige Ausgestaltungen der Lehre des Hauptanspruches.

Die Erfindung wird nachfolgend anhand schematischer Zeichnungen an einem Ausführungsbeispiel näher erläutert.

Es zeigen:

Figur 1  eine Seitenansicht von der rechten Seite aus einer Maschine zum Herstellen von zylindrischen Ballen aus Erntegut mit einer automatischen Bindeeinrichtung gemäß der Erfindung.

Figur 2  im größeren Maßstabe und im Ausschnitt einen senkrechten Schnitt durch den Einlaß der Wickelkammer der Maschine nach Anspruch 1, wobei der Schnurführungsarm in einer Stellung gezeigt ist, in der die Bindeschnur in die Wickelkammer einleitet.

Figur 3  einen Schnitt entlang der Schnittlinie III-III gemäß Figur 1.

Figur 4  im Ausschnitt und in Seitenansicht die Steuereinrichtung und den Antrieb für die Druckmittelpumpe der Bindeeinrichtung und

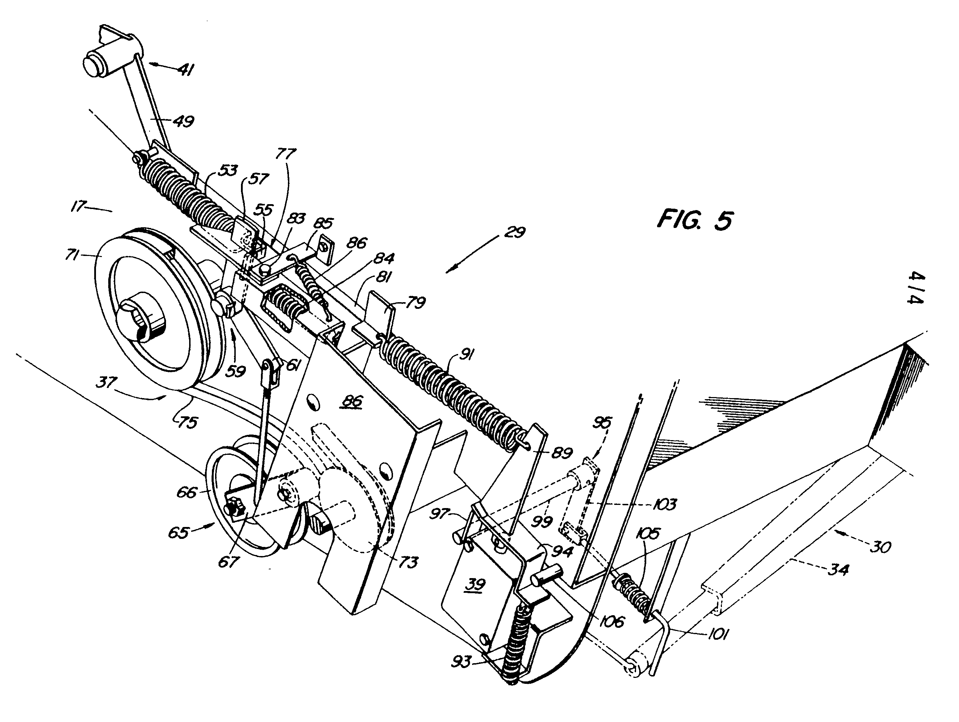

Figur 5  in perspektivischer Darstellung den gleichen Bereich, der in Fig. 4 dargestellt ist, wobei jedoch die hydraulische Pumpe in Fig. 5 weggelassen ist.

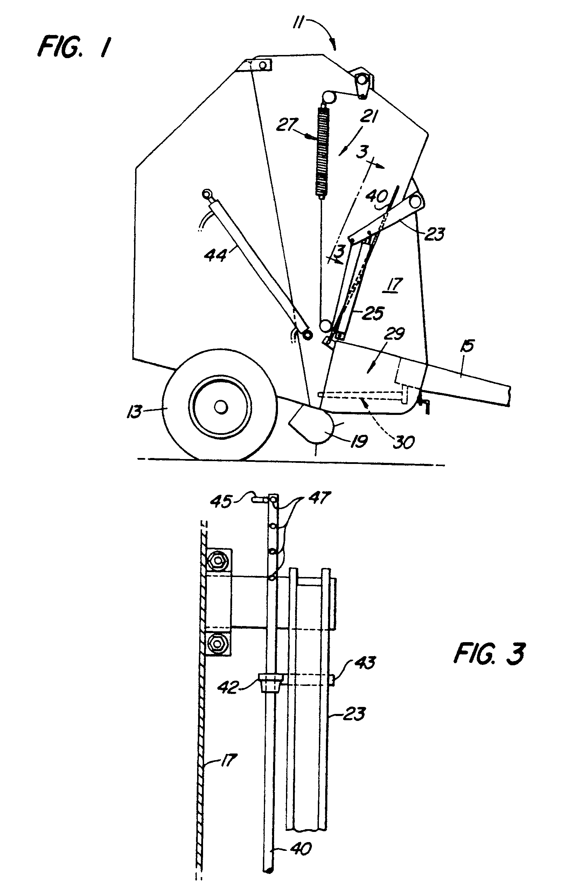

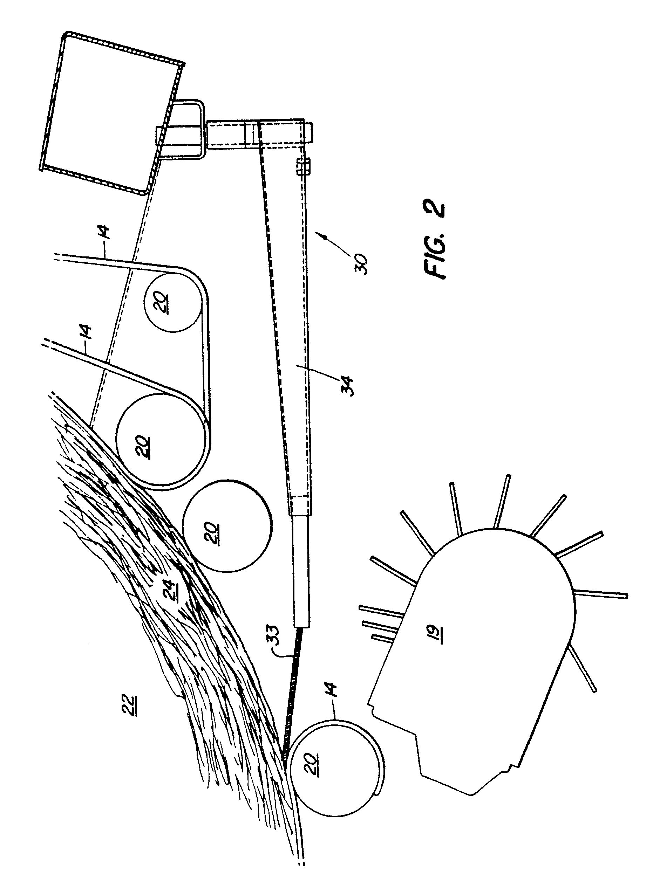

Die in den Figuren 1 und 2 dargestellte Maschine 11 dient zum Herstellen zylindrischer Ballen großer Abmessungen von unterschiedlichem endgültigem Durchmesser. Der Maschine ist eine automatische Bindeanordnung 12 zugeordnet und stützt sich auf dem Boden durch zwei Laufräder 13 ab. Die Maschine kann mit dem Zugglied 15 an einen nicht dargestellten Ackerschlepper angehängt werden. Der Antrieb ihrer verschiedenen Einrichtungen erfolgt durch Anschluß an das Zapfwellengetriebe des Ackerschleppers. Die Maschine 11 weist zwei aufrechte und sich in Fahrtrichtung erstreckende Seitenwände 17,18 auf, die ausgesteift sind. Zwischen diesen wird eine Wickelkammer 22 mit Hilfe von mehreren, im wesentlichen parallel zueinander laufenden Riemen begrenzt, die von mehreren quer ausgerichteten Rollen 20 unterstützt sind, von denen in Fig. 2 nur einige gezeigt sind. Der Maschine ist ein üblicher Aufnehmer 19 sowie eine die Dichte des Ballens steuernde Spanneinrichtung 21 zugeordnet. die Letztere weist zwei jeweils an den Außenseiten der Seitenwände 17 und 18 gelagerte Steuerarme 23 auf, die unter der Wirkung von hydraulischen Spannzylindern 25 und Federanordnungen 27 stehen. Bei Zunahme des Durchmessers des Ballens 24 wird der Arm 23 in Fig. 1 im Gegenuhrzeigersinne entgegen der auf ihn einwirkenden Spannung verschwenkt. Wenn der Durchmesser des Ballens einen vorbestimmten Durchmesser und damit der Arm 23 eine vorbestimmte Schwenkstellung erreicht haben, wird ein Bindevorgang mit Hilfe der automatischen Bindeeinrichtung 12 automatisch ausgelöst. Dabei wird eine Schnur um den Umfang des Ballens 24 gewickelt.

Die Bindeeinrichtung 12 weist eine Einrichtung 30 zum Zuführen der Schnur 33 auf. Ferner ist ein hydraulischer Antrieb 32 zum Verschwenken eines Schnurführungsarmes 34 vorgesehen. Eine Steuereinrichtung 29 löst in Abhängigkeit von dem Erreichen eines vorbestimmten Ballendurchmessers den Bindevorgang aus. Zu diesem Zweck wird der Antrieb 37 für eine Druckmittelpumpe 38 eingeschaltet, um die Pumpe in Gang zu setzen. In dem zugehörigen Hydraulikkreis ist ein Zweistellungs-Richtungsventil 39 vorgesehen, mit dessen Hilfe die Bewegungsrichtung des Schnurführungsarmes 34 umgekehrt werden kann. Das bedeutet, daß der Antrieb des Schnurführungsarmes 34 in beiden Schwenkeinrichtungen hydraulisch erfolgt. Nach Beendigung des Wickelvorganges wird die Schnur 33 durch eine Schnurtrenneinrichtung automatisch durchtrennt. Danach betätigt der Fahrer eine Auswurfeinrichtung mit der Folge, daß durch einen hydraulischen Zylinder 44 die Wickelkammer 22 geöffnet wird um den fertigen Ballen auf den Boden rollen zu lassen.

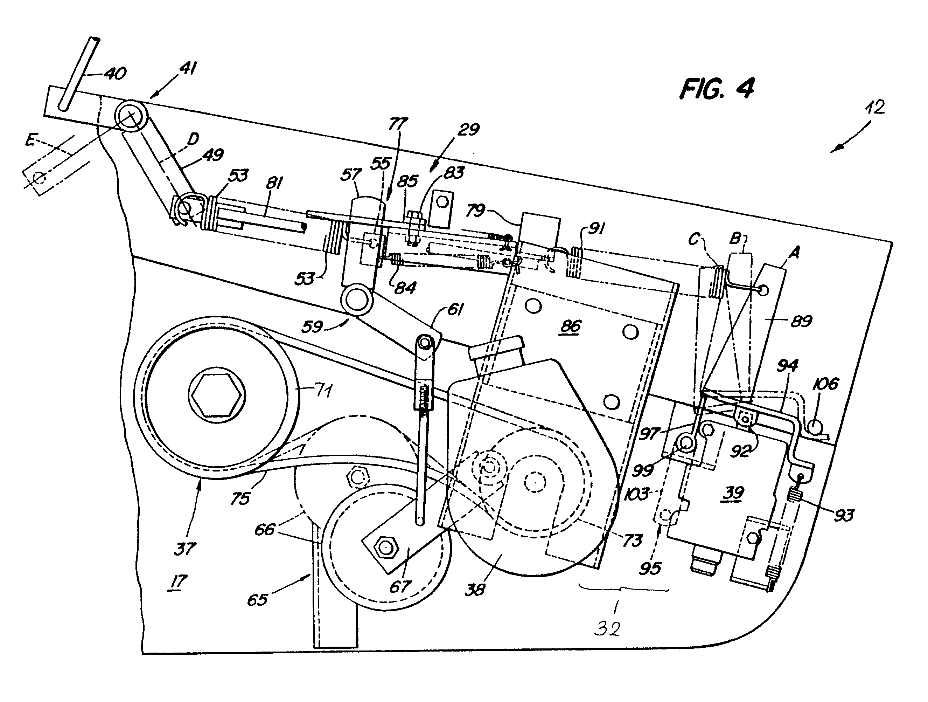

Die Steuereinrichtung 29 umfaßt das den Ballendurchmesser fühlende Glied, nämlich den Steuerarm 23. Dieser ist über ein Steuergestänge 40 mit einem Glockenhebel 41 verbunden. Das Steuergestänge ist als Kupplungsgestänge mit einstellbarem Leerweg zwischen dem Steuerarm 23 und dem Glockenhebel 41 ausgebildet. Im dargestellten Beispiel weist das Kupplungsgestänge eine Stange 40 auf, die in einer Muffe 42 (Fig. 3) verschieblich geführt ist. Die Muffe 42 ist an dem Steuerarm 23 über die Verbindung 43 angelenkt. Der Leerweg bzw. die wirksame Länge der Kupplungsstange 40 kann dadurch eingestellt werden, daß ein Splint 45 oder dgl. in eine von mehreren an der Kupplungsstange 40 vorgesehenen Bohrungen 47 eingesetzt wird. Die Stellung des Splintes 45 bestimmt somit die Größe der Leerbewegung im Bewegungsablauf des Steuerarmes 23 während der Bildung eines Ballens. Sobald der Splint 45 auf die Muffe 42 trifft. wird bei der weiteren Bewegung der Kupplungsstange 40 bei weiterer Zunahme des Durchmessers der Glockenhebel 41 verschwenkt.Je kürzer die wirksame Länge der Kupplungsstange 40 ist umso kleiner ist der Durchmesser des Ballens, bei dem der Bindevorgang ausgelöst wird.

Durch das Angreifen der Kupplungsstange 40 an dem Glockenhebel 41 wird dieser aus der Stellung D (Fig. 4) in die Stellung E verschwenkt. Der Arm 49 des Glockenhebels steht über eine Feder 53 mit der Riemenspanneinrichtung 65 des als Riemenantrieb ausgebildeten Antriebes 37 der Druckmittelpumpe 38 in Verbindung. Dazu gehört ein Ein- und Ausschaltgestänge 59, dessen Arm 57 über Flansch 55 mit der Feder 53 in Verbindung steht. Der zweite Arm 61 des Gestänges 59 wirkt auf einen Arm 67 der Riemenspanneinrichtung 65, welche eine leerlaufende Riemenscheibe 66 aufeist, die über den schwenkbaren Arm 67 in und außer Eingriffstellung mit dem Riemen des Riemenantriebes verbringbar ist, wie dies Fig. 4 zeigt. Der Riementrieb weist einen um die Riemenscheiben 71,73 geschlungenen Riemen 75 auf, wobei eine der Riemenscheiben über den Zapfwellenantrieb angetrieben wird. Eine Verriegelungseinrichtung 77 dient dazu. das Ein- und Ausschaltgestänge 59 in der ausgeschalteten Stellung des Riementriebes festzulegen. Diese Einrichtung wird mit Hilfe eines Auslösegliedes 79 gelöst. das durch ein Gestängeglied 81 mit dem zweiten Arm 49 des Glockenhebels 41 verbunden ist. Die Verriegelungseinrichtung 77 ist bei 83 schwenkbar gelagert und durch Feder 86 in ihre Verriegelungsstellung vorgespannt. Wird der Glockenhebel 41 in die Stellung E verschwenkt. so wird die Feder 53 gespannt und die Verriegelungseinrichtung 77 gelöst. indem ein Arm 85 an dem Auslöseglied 79 angreift und die Verriegelungseinrichtung 77 in die Freigabestellung schwenkt. Damit wird die Wirkung der Feder 53 auf das Ein-Ausschaltgestänge 59 frei und der Riemenantrieb eingeschaltet. Eine entsprechend schwächere Rückstellfeder 84 greift an dem Flansch 55 an. um die Teile bei Nachlassen der Spannung der Feder 53 in ihre Ausgangsstellung zurückzubewegen, so daß die Verriegelungseinrichtung 77 wieder einrasten kann.

Die Steuereinrichtung 29 steuert auch ein Zweistellungs-Richtungsventil 39 für den hydraulischen Schwenkantrieb, dessen Betätigungsarm 89 in die drei Stellungen A, B, C verschwenkt werden kann. Die Stellung A entspricht einer Ruhestellung zwischen zwei Bindevorgängen. Die Stellung entspricht einer Bewegung des Schnurführungsarmes 34 von links nach rechts, während die Stellung C der entgegengesetzten Schwenkbewegung dient. In den Stellungen A und B nimmt das Zweistellungsventil 39 eine Stellung ein, in der der hydraulische Schwenkantrieb den Schnurführungsarm in Richtung auf seine Ruhestellung bewegt. In der Stellung C wird das Ventil 39 umgeschaltet. Zu diesem Zweck weist die Steuereinrichtung 29 eine Zugfeder 91 auf, die zwischen einer Zunge 79 des Ventilbetätigungsarmes 89 und dem Auslöseglied 79 des Gestängegliedes 81 eingespannt ist. Durch die entsprechend schwächere Rückstellfeder 93 kann der Ventilbetätigungsarm 89 zurückgestellt werden.

Eine Sperreinrichtung 95 sorgt zunächst dafür. daß bei Auslösen eines Bindevorganges der Ventilbetätigungsarm 89 aus der Stellung B in die Stellung C bewegt wird. Die Sperrvorrichtung weist ein Sperrglied 99 mit einem Finger 97 auf, der mit der Unterseite des Ventilbetätigungsarmes 89 zusammenwirkt. Ein Betätigungsarm 101 der Sperreinrichtung 95 ist über Verbindungsglied 103 mit Sperrglied 99 verbunden. Bei der Bewegung von Stellung A in Stellung B wird ein Stift 92 nach außen bewegt. Der Ventilbetätigungsarm 89 ist an einer zweiarmigen Wippe 94 angebracht, die an dem Betätigungsstift 92 angelenkt ist. An dem einen Arm der Wippe greift die Feder 93 und am anderen die Sperreinrichtung 95 an. Dadurch daß der Betätigungsstift 92 sich nach außen bewegt, gelangt das eine Ende der Wippe 94 zur Anlage an die Oberseite eines Fingers 97 der Sperreinrichtung, während das andere Ende an die Unterseite eines Anschlages 106 zur Anlage kommt. Der Finger 97 kann gegen die Wirkung einer Feder 105 in Abhängigkeit vom Angreifen des Schnurführungsarmes 34 an den Betätigungsarm 101 im Gegenuhrzeigersinne verschwenkt werden. Dies geschieht am Ende der Hinbewegung des Schnurführungsarmes. Damit wird die Sperreinrichtung gelöst und der Ventilbetätigungsarm 89 kann in die Stellung C verschwenken und das Zweistellungsventil 39 umschalten, so daß die Gegenbewegung des Schnurführungsarmes ausgeführt werden kann. Bei diesem Umschaltvorgang wird der Betätigungsstift 92 entsprechend nach innen bewegt.

Am Ende der Rückbewegung greift der Schnurführungsarm 34 an eine Schnurtrenneinrichtung an, um die Schnur 33 zu durchtrennen. Danach wird der Ballen aus der Wickelkammer ausgeworfen., Da nunmehr die Wickelkammer leer ist schwenkt der Steuerarm 23 im Gegenuhrzeigersinne, wodurch der Glockenhebel 41 wieder in die Ausgangsstellung D zurückschwenken kann. Dabei gelangt die Riemenspanneinrichtung außer Eingriff mit dem Riemen des Pumpenantriebes 37, so daß die Druckmittelpumpe 38 stillgesetzt und der Schnurführungsarm in seiner Ausgangsstellung festgelegt wird. Das Ein- und Ausschaltgestänge 59 wird durch die Verriegelungseinrichtung 77 erneut verriegelt. Der Ventilbetätigungsarm 89 kann aus seiner Stellung C in die Stellung A zurückschwenken, ohne daß sich dabei die Stellung des Zweistellungs-Richtungsventils 39 ändert. Damit ist der Bindevorgang beendet. Die Einrichtung befindet sich in einem Zustand, in dem ein neuer Bindevorgang ausgelöst werden kann.

## Ansprüche

1. Automatische Bindeeinrichtung von Maschinen (11) zum Herstellen von zylindrischen Ballen (24) aus Erntegut in einer Wickelkammer (22), bei der die Bindeeinrichtung (12) eine Abgabeeinrichtung mit einem zwischen Endstellungen vor der Wickelkammer (22) hin und her schwenkbaren Schnurführungsarm (34) zum Abgeben und Einführen der Bindeschnur (33) in die Wickelkammer (22) zum Umwickeln des gebildeten zylindrischen Ballens (24), und einen hydraulischen Schwenkantrieb (32) mit einem doppelwirkenden Zylinder einer Druckmittelpumpe (38) und einem Pumpenantrieb (37) aufweist, wobei eine in Abhängigkeit vom Erreichen eines vorbestimmten Ballendurchmessers ansprechende Steuereinrichtung (29) vorgesehen ist, welche zwischen einem den Ballendurchmesser fühlenden Glied (23) und einem weiteren Glied (41) ein Steuergestänge (40) aufweist, mit dessen Hilfe der vorbestimmte Durchmesser des Ballens einstellbar ist, und welche einen Schwenkzyklus des Schnurführungsarmes (34) auslöst, dadurch **gekennzeichnet,** daß das weitere Glied (41) der auf einen vorbestimmten Ballendurchmesser ansprechenden Steuereinrichtung (29) ein den Antrieb (37) für die Druckmittelpumpe (38) ein- bzw. ausschaltendes Glied ist und das Steuergestänge (40) als Kupplungsstange mit einem einstellbaren Leerweg zwischen den beiden Gliedern (23 und 41) ausgebildet ist.

2. Automatische Bindeeinrichtung nach Anspruch 1, dadurch **gekennzeichnet,** daß die Kupplungstange (40) mit dem einen der beiden zu kuppelnden Gliedern (23 und 41) fest und mit dem anderen Glied (23) über eine Schiebeführung (42,43) mit den Leerweg bestimmenden verstellbaren Anschlägen (45,47) verbunden ist.

## Claims

1. An automatic binding device for machines (11) for producing cylindrical bales (24) from harvested material in a wrapping chamber (22), in which the binding device (12) has a delivery device with a twine guide arm (34), pivotable to and fro between end positions in front of the wrapping chamber (22), said twine guide arm (34) serving to deliver and introduce the binding twine (33) into the wrapping chamber (22) in order to bind the formed cylindrical bale (24), said binding device (12) also having a hydraulic pivotal drive (32) with a doubleacting cylinder of a hydraulic pump (38) and a pump drive, a control device (29) responding to the attainment of a predetermined bale diameter and having, between a member (23) scanning the bale diameter and a further member (41), a control linkage (40) with whose aid the predetermined bale diameter can be set, and which initiates a pivotal cycle of the twine guide arm (34), characterised in that the further member (41) of the control device responding to a predetermined bale diameter is a member switching on or off the drive (37) for the hydraulic pump (38), and the control linkage (40) is designed as a coupling linkage with an adjustable idle path between both members (23 and 41).

2. An automatic binding device according to Claim 1, characterised in that the coupling rod (40) is rigidly connected to one of the two members (23 and 41) to be coupled, and is connected to the other member (23) via a sliding guide (42,43) with stops (45, 47) determining the idle path.

**Revendications**

1. Lieuse automatique de machines (11) pour fabriquer des balles cylindriques (24) d'une récolte dans une chambre d'enroulement (22), la lieuse (12) comportant un dispositif d'évacuation possédant un bras formant guide-ficelle (34) pouvant pivoter en va-et-vient entre des positions d'extrémité de la chambre d'enroulement (22) et servant à délivrer et introduire la ficelle de liage (33) dans la chambre d'enroulement (22) pour le ficelage de la balle cylindrique formée (24), et un dispositif hydraulique d'entraînement pivotant (32) comportant un vérin à double effet d'une pompe à fluide comprimé (38) et un dispositif (37) d'entrainement de la pompe, et dans laquelle il est prévu un dispositif de commande (29), qui répond en fonction du fait que le diamètre de la balle atteint une valeur prédéterminée, et comporte, entre un élément (23) détectant le diamètre de la balle et un autre élément (41), une tringlerie de commande (40), qui permet de régler le diamètre prédéterminé de la balle, et qui déclenche un cycle de pivotement du bras guide-ficelle (34), caractérisée en ce que l'autre élément (41) du dispositif de commande (29), qui répond à un diamètre prédéterminé de la balle, est un élément déclenchant et arrêtant le dispositif d'entraînement (37) de la pompe à fluide comprimé (38) et que la tringlerie de commande (40) est réalisée sous la forme d'une barre d'accouplement comportant une course à vide réglable, entre les deux éléments (23 et 41).

2. Lieuse automatique selon la revendication 1, caractérisée en ce que la barre d'accouplement (40) est raccordée rigidement à l'un des deux éléments (23 et 41) devant être accouplés, et à l'autre élément (23) par l'intermédiaire d'une coulisse (42,43) comportant des butées réglables (45,47) déterminant la course à vide.

FIG. 1

11

27
21
3
40
23
44
3
17
25
29
15
13
19
30

45
47
43
42
23
17
40

FIG. 3

FIG. 2

FIG. 4

FIG. 5

4/4